# FASCICULE DE BREVET EUROPEEN

(11) **EP 1 281 615 B1**
(45) Date de publication et mention de la délivrance du brevet: **29.11.2006**
(21) Numéro de dépôt: 02291911.2
(22) Date de dépôt: 29.07.2002
(51) Int. Cl.: B64D 27/26, F02C 7/20

(54) **Dispositif d'accrochage d'un moteur sur un aéronef**
Triebwerkaufhängungsvorrichtung an einem Luftfahrzeug
Device for locking an engine on an aircraft

(30) Priorité: 31.07.2001 FR 0110261
(43) Date de publication de la demande: 05.02.2003
(73) Titulaire: AIRBUS France, 31060 Toulouse Cedex 03 (FR)
(72) Inventeur: Levert, Stéphane, 31200 Toulouse (FR); Roszak, Sébastien, 31100 Toulouse (FR)
(74) Mandataire: Poulin, Gérard

(56) Documents cités:
- WO-A-93/11041
- FR-A- 2 698 068
- US-A- 5 927 644

## Description

### Domaine technique

L'invention concerne un dispositif conçu pour assurer l'accrochage d'un moteur d'aéronef sur un mât réacteur fixé à un élément de structure de l'aéronef, tel que la voilure ou le fuselage.

De façon plus précise, l'invention concerne un dispositif d'accrochage conçu pour transmettre à la structure de l'aéronef, au travers du mât réacteur, les efforts supportés par le moteur selon des directions latérale et verticale par rapport à un axe longitudinal du moteur, dans le cas où le moteur est fixé sous la voilure. Lorsque le moteur est monté sur le côté du fuselage, le dispositif d'accrochage selon l'invention est conçu pour transmettre les efforts appliqués selon des directions latérale et horizontale par rapport à l'axe longitudinal dudit moteur.

Dans la suite du texte, seul le cas d'un moteur suspendu à la voilure d'un aéronef est décrit. La description qui va suivre s'applique toutefois aussi au cas d'un moteur fixé sur le côté du fuselage, en remplaçant les efforts appliqués selon une direction verticale par des efforts appliqués selon une direction horizontale.

### Etat de la technique

Les moteurs qui équipent les aéronefs sont suspendus sous la voilure ou accrochés latéralement sur le fuselage par l'intermédiaire d'un élément appelé "mât réacteur". Pour simplifier, cet élément est appelé "mât" dans l'ensemble du texte.

La liaison entre le moteur et le mât est généralement assurée par deux ou trois dispositifs d'accrochage complémentaires, qui remplissent des fonctions distinctes.

L'un de ces dispositifs d'accrochage a pour fonction de reprendre le couple moteur ainsi que les efforts engendrés par le moteur selon des directions latérale et verticale, afin de les retransmettre à la structure de l'aéronef par l'intermédiaire du mât. L'invention concerne précisément un dispositif d'accrochage de ce type. Il est à noter qu'un tel dispositif peut être monté indifféremment à l'avant ou à l'arrière du moteur, les dimensions des pièces qui le constituent étant adaptées en conséquence.

Comme l'illustrent notamment les documents UA-A-5927644, US-A-5 620 154 et US-A-5 275 357, certains des dispositifs d'accrochage existants comportent une structure d'accrochage principale et une structure d'accrochage de secours. La structure d'accrochage principale assure la transmission des efforts lors du fonctionnement normal, c'est-à-dire lorsque toutes les pièces du dispositif d'accrochage sont intactes. La structure d'accrochage de secours est prévue pour assurer la continuité de la fonction de transmission des efforts entre le moteur et l'avion en cas de rupture de l'une des pièces de la structure d'accrochage principale.

Les dispositifs d'accrochage existants, tels que ceux qui sont illustrés par les documents cités précédemment, comprennent habituellement une ferrure intermédiaire, fixée au mât réacteur par exemple au moyen de vis, et au moins deux bielles rotulées, assurant la liaison entre la ferrure et le moteur. Le montage rotulant des bielles sur la ferrure et sur le moteur permet d'éviter que la structure reprenne des efforts suivant l'axe longitudinal du moteur. Ce montage permet aussi de compenser la dilatation thermique du moteur et de préserver le caractère isostatique de la liaison entre le mât et le moteur.

Comme l'illustrent également les documents US-A-5927644, US-A-5 620 154 et US-A-5 275 357, lorsque les dispositifs d'accrochage existants comprennent des structures d'accrochage de secours, celles-ci incluent généralement des éléments additionnels, tels qu'une ou plusieurs bielles supplémentaires interposées entre la ferrure et le moteur. Ces éléments additionnels présentent des jeux tels qu'ils ne reprennent normalement aucun effort lorsque les pièces formant la structure d'accrochage principale sont intactes et, par conséquent, en état de remplir leurs fonctions.

Certains dispositifs d'accrochage existants, tels que ceux qui sont utilisés sur les avions "AIRBUS", comprennent une pièce intermédiaire interposée entre le mât et la ferrure. Cette pièce intermédiaire a une section trapézoïdale lorsqu'elle est vue en coupe dans un plan passant par l'axe longitudinal du moteur. Elle présente une première surface plane prévue pour être fixée, par exemple au moyen de quatre vis, sur un plan d'attache incliné du mât et une deuxième surface plane horizontale servant à la fixation de la ferrure, par exemple au moyen de quatre autre vis. La pièce intermédiaire peut être monobloc ou constituée de deux demi-pièces assemblées entre elles par des vis.

Dans les dispositifs d'accrochage existants, tels que ceux qui sont décrits dans les documents US-A-5927644 US-A-5 620 154 et US-A-5 275 357, les éléments additionnels qui forment la structure d'accrochage de secours sont toujours interposés entre la ferrure de la structure d'accrochage principale et le moteur. En d'autres termes, ces éléments additionnels permettent de conserver l'intégrité de l'accrochage du moteur lorsque la liaison entre la ferrure et le moteur est remise en cause. En revanche, ils ne permettent pas de conserver cette intégrité lorsque la défaillance concerne la liaison entre le mât et la ferrure, c'est-à-dire par exemple les vis de fixation reliant ces deux éléments ou la pièce intermédiaire, lorsque cette pièce existe.

De plus, le cumul des fonctions d'accrochage principal et d'accrochage de secours au travers d'éléments séparés additionnels rend les dispositifs d'accrochage plus lourds et plus complexes. Cela va à l'encontre des objectifs permanents dans le domaine aéronautique, qui sont la diminution de la masse, la simplicité et la fiabilité.

En outre, lorsque les efforts à transmettre sont très importants, notamment dans le cas d'un moteur lourd et de forte poussée, il peut s'avérer nécessaire de renforcer le dispositif d'accrochage. Cela se traduit alors par une augmentation du nombre de fixations. Ainsi, la fixation de la ferrure sur la pièce intermédiaire, lorsqu'elle existe, ou directement sur le mât peut être faite par deux rangées de quatre boulons au lieu des deux rangées de deux boulons utilisées habituellement. Cela oblige la ferrure fixée au mât à être plus rigide, ce qui est obtenu par un agrandissement de ses dimensions. Ainsi, la largeur de la ferrure peut être, par exemple, sensiblement doublée par rapport à celle d'une ferrure traditionnelle.

Avec un tel agencement, on s'aperçoit aisément que le chargement des quatre boulons n'est pas uniforme. En effet, les deux boulons placés à l'extérieur transmettent peu d'efforts par rapport aux deux boulons placés à l'intérieur. En fait, environ 20% des efforts sont appliqués sur les boulons externes et 80% des efforts sont appliqués sur les boulons internes. Dans le temps, cette proportion induit une fatigue structurale beaucoup plus importante sur les boulons internes que sur les boulons externes. Cela se traduit par des risques de rupture beaucoup plus fréquents sur les boulons internes.

Ce problème pourrait être résolu par un renforcement des boulons internes. Toutefois, cela nécessiterait de recourir à un outillage spécifique pour visser ces boulons. De plus, de tels boulons dépasseraient dans la veine aérodynamique et généreraient de la traînée. De surcroît, compte tenu de la faible place disponible dans le dispositif d'accrochage, cette solution est difficilement applicable dans la pratique.

### Exposé de l'invention

L'invention a précisément pour objet un dispositif d'accrochage d'un moteur sur un mât d'un aéronef, dont la conception originale lui permet de préserver l'intégrité de l'accrochage du moteur même en cas de rupture de l'une des pièces de la structure d'accrochage principale ou de la pièce intermédiaire, lorsqu'elle existe, tout en assurant une répartition et une transmission homogènes des efforts du moteur vers le mât.

Conformément à l'invention, ce résultat est obtenu au moyen d'un dispositif d'accrochage tel que défini dans la revendication 1.

Selon un mode de réalisation préféré de l'invention, le dispositif d'accrochage comprend de plus un ensemble formant ferrure, et des moyens de fixation par lesquels l'ensemble formant ferrure est apte à être fixé au mât, et dans lequel l'ensemble formant ferrure comprend au moins deux ferrures et chaque ensemble formant bielle latérale comprend deux bielles aptes à relier séparément chacune des ferrures au moteur.

La présence d'un ensemble formant ferrure et les dédoublements de la ferrure et des bielles de reprise d'efforts entre le moteur et les ferrures permettent alors de s'affranchir d'une structure d'accrochage de secours telle que celles qui sont décrites dans les documents US-A-5 620 154 et US-A-5 275 357. En effet, le dispositif d'accrochage selon l'invention est capable de reprendre les efforts dans les différents cas de défaillance possibles, sans ajout d'élément additionnel.

De plus, alors que les dispositifs d'accrochage décrits dans les deux documents précités ne permettent pas de conserver l'intégrité de l'accrochage du moteur lorsque la défaillance concerne la liaison entre le mât et la ferrure, le dispositif d'accrochage selon l'invention permet aussi de prendre en compte ce type de défaillance.

En d'autres termes, le dispositif d'accrochage selon l'invention permet de préserver l'intégrité totale de la liaison entre le mât et le moteur, tout en étant simple et fiable.

Selon un mode de réalisation encore préféré, bien que non limitatif, de l'invention, le dispositif d'accrochage comprend de plus un ensemble formant pièce intermédiaire, interposé entre les deux ferrures et le mât. Cet ensemble formant pièce intermédiaire comprend deux pièces intermédiaires et les moyens de fixation comprennent des premiers moyens de fixation de chaque ferrure sur l'une des pièces intermédiaires et des deuxièmes moyens de fixation de chaque pièce intermédiaire sur le mât.

De plus, il est à noter que le dédoublement des bielles de reprise d'efforts et leur fixation sur la ferrure au moyen de boulons permettent une meilleure répartition et une transmission fiable des efforts dans lesdits boulons, la charge supportée par chaque boulon étant égale à une même fraction de la charge totale à transmettre.

Les moyens de liaison entre chaque ensemble formant bielle latérale et les ferrures comprennent de préférence deux chapes femelles appartenant à chacune des ferrures et dont les flancs juxtaposés forment ledit flanc central.

En outre, des rotules sont avantageusement interposées entre l'axe d'une part et les bielles et le flanc central des chapes femelles d'autre part. Cet agencement permet de donner une légère mobilité à l'axe. Dans certaines conditions extrêmes, l'axe peut venir en contact avec le bord des alésages pratiqués dans les flancs latéraux de la chape femelle. Les efforts peuvent alors cheminer par l'un ou l'autre desdits flancs de la chape femelle. Comme la charge est extrême, on arrive ainsi à mieux la répartir dans ce genre de situation. Le jeu entre l'axe et les alésages pratiqués dans les flancs latéraux doit être suffisant pour que l'axe ne vienne pas au contact avec le bord des alésages en cas de charge normale, afin d'éviter toute fatigue inutile des flancs latéraux.

Ainsi, le dispositif cumule alors les fonctions de structure d'accrochage principale et de structure d'accrochage de secours et, dans les cas de charge extrême, il offre un chemin supplémentaire pour la transmission des efforts du moteur vers le mât.

### Brève description des dessins

On décrira à présent, à titre d'exemple illustratif et non limitatif, un mode de réalisation préféré de l'invention, en se référant aux dessins annexés, dans lesquels :
- la figure 1 est une vue de trois quarts arrière, en perspective, qui représente un dispositif d'accrochage d'un moteur d'aéronef sur un mât, conformément à l'invention ; et
- la figure 2 est vue de côté à plus grande échelle, en perspective et en coupe, du dispositif de la figure 1.

### Description détaillée d'un mode de réalisation préféré de l'invention

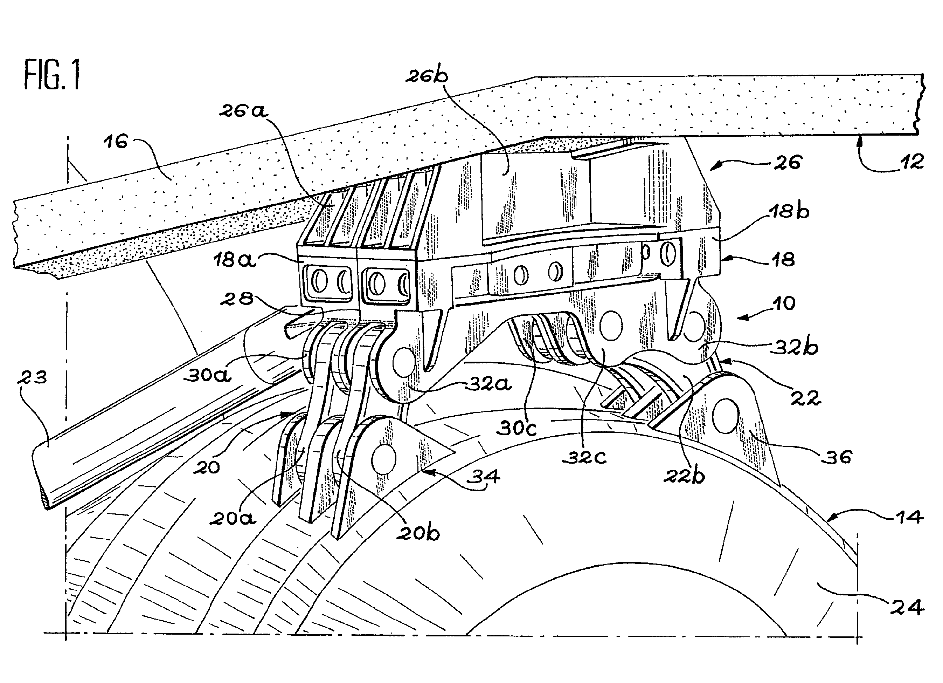

Comme l'illustre schématiquement la figure 1, un dispositif d'accrochage 10 conforme à l'invention est interposé entre un mât réacteur 12 et un moteur 14 d'aéronef, à l'avant ou à l'arrière dudit moteur.

Le mât réacteur 12 est prévu pour être fixé à un élément de structure de l'aéronef, tel qu'un élément de voilure ou de fuselage. Cette fixation est assurée par des moyens connus, qui ne font pas partie de l'invention. Pour faciliter la lecture de la figure 1, la partie supérieure du mât réacteur 12 intégrant les moyens de fixation de celui-ci à la structure de l'aéronef est volontairement omise. Plus précisément, on a seulement représenté sur la figure 1 le longeron inférieur 16 du mât 12.

Le dispositif d'accrochage 10 sert d'interface entre le moteur 14 de l'aéronef et le mât réacteur 12. Plus précisément, dans le mode de réalisation représenté à titre d'exemple sur les figures, le dispositif d'accrochage 10 a pour fonction de reprendre le couple moteur ainsi que les efforts exercés selon des directions latérale et verticale (dans le cas d'un moteur suspendu à la voilure) par rapport à l'axe longitudinal du moteur 14, pour les retransmettre à la structure de l'aéronef au travers du mât 12. Le dispositif d'accrochage 10 a aussi pour fonction d'assurer le transfert des efforts, même en cas de défaillance d'une pièce quelconque de ce dispositif.

D'autres dispositifs d'accrochage (non représentés) sont interposés de façon connue entre le mât 12 et le moteur 14 pour transmettre à ce dernier les efforts exercés selon les autres directions. Ces autres dispositifs sont réalisés selon différentes techniques connues de l'homme du métier. Ils ne font pas partie de l'invention.

Le dispositif d'accrochage 10 conforme à l'invention comprend une structure d'accrochage unique, qui assure la transmission de tous les efforts précités, que les pièces qui le constituent soient endommagées ou non. Le dispositif d'accrochage 10 cumule ainsi à la fois les fonctions de structure d'accrochage principale et de structure d'accrochage de secours.

Dans le mode de réalisation préféré de l'invention illustré sur la figure 1, le dispositif d'accrochage 10 comprend un ensemble 18 formant ferrure, comportant deux ferrures 18a et 18b, ainsi que deux ensembles 20 et 22 formant bielles latérales, comportant chacun deux bielles 20a, 20b et 22a, 22b respectivement (la bielle 22a n'est pas visible sur les figures). Chacune des bielles latérales 20a, 20b, 22a et 22b est articulée séparément sur l'ensemble 18 formant ferrure et sur une partie 24 de la structure du moteur 14, prévue pour être fixée sur le mât, de façon à assurer la liaison entre le moteur 14 et l'ensemble 18 formant ferrure selon des directions circonférentielles opposées par rapport au moteur.

Le dispositif d'accrochage 10 selon l'invention comprend également deux bielles rotulées 23 reliant l'ensemble 18 formant ferrure au moteur 14 selon des directions orientées en oblique par rapport à l'axe longitudinal du moteur.

Dans le mode de réalisation représenté sur les figures, le dispositif d'accrochage 10 comprend de plus un ensemble 26 formant pièce intermédiaire, comportant deux pièces intermédiaires 26a et 26b, par lequel l'ensemble 18 formant ferrure est fixé au mât réacteur 12. En variante, l'ensemble 26 formant pièce intermédiaire peut toutefois être supprimé sans sortir du cadre de l'invention.

Enfin, des moyens de fixation sont prévus pour fixer l'ensemble 18 formant ferrure au mât 12. Dans le mode de réalisation représenté sur les figures, ces moyens de fixation comprennent des premiers moyens de fixation, tels que des boulons (non représentés), des ferrures 18a et 18b sur les pièces intermédiaires 26a et 26b, respectivement, et des deuxièmes moyens de fixation, tels que des boulons (non représentés), des pièces intermédiaires 26a et 26b sur le longeron inférieur 16 du mât 12.

Les ferrures 18a et 18b sont assemblées l'une à l'autre selon une interface 28 qui matérialise un plan de symétrie de l'ensemble formant ferrure 18. L'assemblage des ferrures 18a et 18b est assuré par des moyens d'assemblage appropriés tels que des vis (non représentées).

Chacune des ferrures 18a et 18b comprend trois chapes femelles 30a, 30b, 30c et 32a, 32b, 32c, respectivement, dont les flancs sont formés intégralement dans la ferrure correspondante (la chape femelle 30b n'est pas visible sur la figure 1).

La partie 24 de la structure du moteur 14, prévue pour être fixée sur le mât 12, comprend deux chapes femelles 34 et 36. Les chapes femelles 34 et 36 peuvent faire partie intégrante de la structure du moteur 14 ou être rapportées sur celle-ci selon des techniques connues de l'homme du métier, qui ne font pas partie de l'invention.

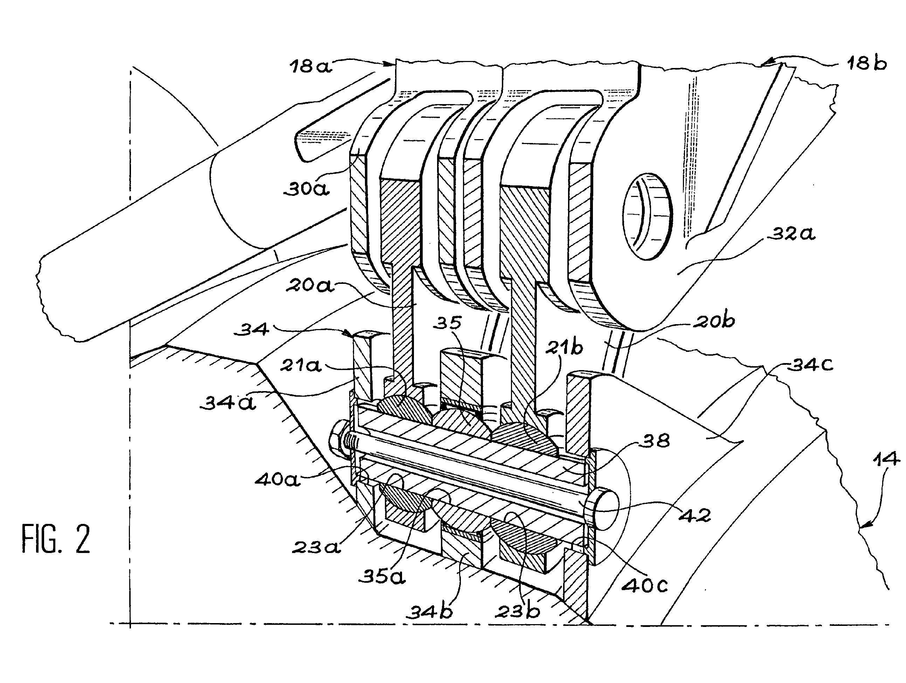

Comme l'illustre plus précisément la figure 2 dans le cas de la chape 34, chacune des chapes femelles 34 et 36 comprend deux flancs latéraux 34a, 34c et 36a, 36c, ainsi qu'un flanc central 34b et 36b, respectivement (les flancs 36a, 36b et 36c n'apparaissent pas sur la figure 2).

Les bielles 20a et 20b du premier ensemble 20 formant bielles latérales sont des bielles rectilignes. Ces bielles 20a et 20b sont respectivement interposées entre les chapes femelles 30a et 32a des ferrures 18a et 18b et la chape femelle 34 liée à l'élément 24 de la structure du moteur.

Les bielles 22a et 22b du deuxième ensemble 22 formant bielles latérales sont des bielles en forme de V, dites "boomerang". Ces bielles 22a et 22b sont respectivement interposées entre les chapes femelles 30b, 30c et 32b, 32c des ferrures 18a et 18b et la chape femelle 36 liée à l'élément 24 de la structure du moteur.

On décrira à présent, en se référant à la figure 2, les moyens de fixation des bielles 20a et 20b sur la chape femelle 34. Les moyens de fixation des bielles 22a et 22b sur la chape femelle 36 sont identiques aux précédents et ne seront donc pas décrits. Il en est de même pour les moyens de fixation des bielles 20a et 20b sur les chapes femelles 30a et 32a des ferrures 18a et 18b et pour les moyens de fixation des bielles 22a et 22b sur les chapes femelles 30b, 30c et 32b, 32c des ferrures 18a et 18b.

Les moyens de fixation précités comprennent des rotules 21a et 21b montées dans les parties terminales de chacune des bielles 20a et 20b, une rotule 35 montée dans le flanc central 34b de la chape femelle 34 et un axe creux 38. Plus précisément, l'axe creux 38 traverse des alésages 40a et 40c usinés respectivement dans les flans latéraux 34a et 34c de la chape femelle 34, des alésages 23a et 23b usinés respectivement dans les rotules 21a et 21b et un alésage 35a usiné dans la rotule 35. Une vis 42 traverse l'axe creux 38 de part en part, afin d'assurer l'assemblage des bielles 20a et 20b sur la chape 34.

Le diamètre des alésages 40a et 40c formés dans les flancs latéraux 34a et 34c de la chape femelle 34 est sensiblement supérieur au diamètre extérieur de l'axe 38. Ainsi, en fonctionnement normal, il existe entre l'axe 38 et les flancs latéraux 34a et 34c un jeu suffisant pour que ces pièces ne soient pas en contact mutuel. Ce jeu tient compte de la dilatation et des mouvements du moteur par rapport aux différents organes.

A l'inverse, le diamètre de l'alésage 35a usiné dans la rotule montée dans le flan central 34b de la chape 34 est égal à celui de l'axe 38, pour que ces pièces soient toujours en contact.

Le jeu existant entre l'axe 38 et les flancs latéraux 34a et 34c permet de continuer à assurer la transmission des efforts du moteur vers le mât même en cas de rupture de l'une des deux bielles 20a et 20b ou de la chape centrale 34b. Par ailleurs, à l'autre extrémité des bielles 21a et 21b, l'absence de jeu entre l'axe creux correspondant et la rotule montée dans les flancs centraux des chapes 30a et 32a des ferrures 18a et 18b a pour effet de solidariser et de rigidifier lesdits flancs centraux, qui se présentent alors, d'un point de vue fonctionnel, comme deux flancs centraux monoblocs.

Le même avantage se retrouve au niveau de la liaison assurée par les bielles 22a et 22b.

Lorsqu'elles existent, les pièces intermédiaires 26a et 26b permettent d'assurer l'interface entre les ferrures 18a et 18b et le longeron inférieur 16 du mât 12. Dans le cas le plus courant où le moteur 14 est accroché sous la voilure de l'aéronef, sa fixation se fait sur une face plane du longeron inférieur 16 qui est tournée vers le bas et vers l'avant. Les pièces d'interface 26a et 26b tiennent compte de cette inclinaison et assurent une orientation horizontale de la face supérieure plane de l'ensemble 18 formant ferrure. A cet effet, l'ensemble 26 formant pièce intermédiaire présente une section trapézoïdale lorsqu'il est observé dans un plan de coupe passant par l'axe longitudinal du moteur 14.

Les pièces intermédiaires 26a et 26b sont assemblées l'une à l'autre selon l'interface 28, qui matérialise également un plan de symétrie de l'ensemble 26 formant pièce intermédiaire. L'assemblage des pièces intermédiaires 26a et 26b est assuré par des moyens d'assemblage appropriés tels que des vis (non représentées).

Ainsi, l'ensemble 26 formant pièce intermédiaire présente une face supérieure plane prévue pour être fixée par des moyens de fixation appropriés sur la face inférieure inclinée du longeron inférieur 16 du mât 12. L'ensemble 26 formant pièce intermédiaire présente également une face inférieure plane qui est fixée par des moyens de fixation appropriés sur une face supérieure plane de l'ensemble 18 formant ferrure.

De façon plus précise, chacune des pièces intermédiaires 26a et 26b est fixée sous le longeron inférieur 16, par exemple au moyen de deux boulons (non représentés) ou par tout moyen techniquement équivalent. De même, chacune des pièces intermédiaires 26a et 26b est fixée sur l'une des ferrures 18a et 18b par exemple au moyen de deux boulons (non représentés) ou par tout moyen techniquement équivalent.

En cas de rupture de l'une quelconque des quatre bielles 20a, 20b, 22a et 22b, les efforts en provenance du moteur 14 sont transmis au mât 12 par l'intermédiaire de l'autre bielle de l'ensemble formant bielle 20 ou 22 dont une bielle est cassée, ainsi que par toutes les autres pièces valides du dispositif d'accrochage 10. En d'autres termes, le dédoublement des pièces permet d'assurer la transmission des efforts quelle que soit la pièce du dispositif qui se révèle défectueuse.

Par conséquent, le dispositif d'accrochage selon l'invention permet d'atteindre les objectifs visés, consistant à préserver l'intégrité de l'accrochage du moteur même en cas de défaillance de l'une quelconque des pièces dudit dispositif, à assurer une transmission d'efforts mieux répartie et plus fiable et à simplifier ledit dispositif d'accrochage.

Bien entendu, l'invention n'est pas limitée au mode de réalisation qui vient d'être décrit à titre d'exemple. En particulier, les liaisons entre les bielles 20a, 20b, 22a et 22b et le mât 12 et entre les bielles 20a, 20b, 22a et 22b et la structure du moteur 14 peuvent être différentes de celles qui ont été décrites. Ainsi, comme on l'a déjà mentionné, les pièces intermédiaires 26a et 26b peuvent, dans certains cas, être supprimées. De même, les boulons assurant la fixation entre le mât 12 et les pièces intermédiaires 26a et 26b ainsi qu'entre celles-ci et les ferrures 18a et 18b peuvent être remplacés par des moyens de fixation équivalents tels que des vis, ou autres. Enfin, les ferrures 18a et 18b peuvent également être supprimées. Dans ce cas, les bielles sont articulées directement sur le mât, par des liaisons comparables à celles qui ont été décrites.

## Revendications

1. Dispositif d'accrochage (10) d'un moteur (14) sur un mât (12) d'un aéronef, comprenant deux ensembles (20, 22) formant bielles latérales, et des moyens de liaison aptes à relier séparément chacun des ensembles formant bielles latérales respectivement au mât (12) et au moteur (14), **caractérisé en ce que** chacun des moyens de liaison comprend une chape (34, 36, 30a, 32a, 30b, 32b) fixée respectivement au mât (12) et au moteur (14) et comportant un élément central (34b) et deux éléments latéraux (34a, 34c) et un axe (38) traversant sans jeu lesdits ensembles (20, 22) formant bielles latérales et l'élément central (34b) de la chape et traversant avec jeu les éléments latéraux (34a, 34c) de la chape.

2. Dispositif d'accrochage selon la revendication 1, dans lequel ledit dispositif d'accrochage (10) comprend de plus un ensemble (18) formant ferrure, et des moyens de fixation (26) par lesquels l'ensemble (18) formant ferrure est apte à être fixé au mât (12), et dans lequel l'ensemble (18) formant ferrure comprend au moins deux ferrures (18a, 18b) et chaque ensemble (20, 22) formant bielle latérale comprend deux bielles (20a, 20b, 22a, 22b) aptes à relier séparément chacune des ferrures (18a, 18b) au moteur (14).

3. Dispositif d'accrochage selon la revendication 2, dans lequel ledit dispositif d'accrochage (10) comprend de plus un ensemble (26) formant pièce intermédiaire, interposé entre les deux ferrures (18a, 18b) et le mât (12), ledit ensemble (26) formant pièce intermédiaire comprenant deux pièces intermédiaires (26a, 26b) et les moyens de fixation comprenant des premiers moyens de fixation de chaque ferrure (18a, 18b) sur l'une des pièces intermédiaires (26a, 26b) et des deuxièmes moyens de fixation de chaque pièce intermédiaire (26a, 26b) sur le mât (12).

4. Dispositif d'accrochage selon l'une quelconque des revendications 2 et 3, dans lequel lesdits moyens de liaison entre chaque ensemble (20, 22) formant bielle latérale et les ferrures (18a, 18b) comprennent deux chapes femelles (30a, 32a, 30b, 32b) appartenant à chacune des dites ferrures et dont les flancs juxtaposés forment ledit flanc central.

5. Dispositif d'accrochage selon l'une quelconque des revendications précédentes, dans lequel des rotules (21a, 21b, 35) sont interposées entre ledit axe (38) d'une part et les bielles (20a, 20b; 22a, 22b) et le flanc central (34b) desdites chapes femelles (34, 36, 30a, 32a, 30b, 32b) d'autre part.

## Claims

1. Device (10) for the attachment of an engine (14) to an aircraft pylon (12), comprising two assemblies (20, 22) forming lateral rods, and linking means able to separately link each of the assemblies forming lateral rods respectively to pylon (12) and engine (14), **characterized in that** each of the linking means comprises a yoke (34, 36, 30a, 32a, 30b, 32b) respectively fixed to the pylon (12) and engine (14) and incorporating a central web (34b) and two lateral webs (34a, 34c) and a pin (38) traversing in clearance-free manner said assemblies (20, 22) forming lateral rods and the central web (34b) of the yoke and traversing with clearance the lateral webs (34a, 34c) of the yoke.

2. Attachment device according to claim 1, wherein said attachment device (10) also comprises an assembly (18) forming a bracket and fixing means (26) by which the assembly (18) forming the bracket can be fixed to the pylon (12), and wherein the assembly (18) forming the bracket comprises at least two brackets (18a, 18b) and each assembly (20, 22) forming the lateral rod comprises two rods (20a, 20b, 22a, 22b) able to separately link each of the brackets (18a, 18b) to engine (14).

3. Attachment device according to claim 2, wherein said attachment device (10) also comprises an assembly (26) forming an intermediate part, interposed between the two brackets (18a, 18b) and pylon (12), said assembly (26) forming the intermediate part comprising two intermediate parts (26a, 26b) and the fixing means comprise first means for fixing each bracket (18a, 18b) to one of the intermediate parts (26a, 26b) and second means for fixing each intermediate part (26a, 26b) to pylon (12).

4. Attachment device according to either of the claims 2 and 3, wherein said linking means between each assembly (20, 22) forming a lateral rod and the brackets (18a, 18b) comprise two female yokes (30a, 32a, 30b, 32b), each belonging to said brackets and whereof the juxtaposed webs form said central web.

5. Attachment device according to any one of the preceding claims, wherein spherical bearings (21a, 21b, 35) are interposed between said pin (38) on the one hand and the rods (20a, 20b, 22a, 22b) and the central web (34b) of said female yokes (34, 36, 30a, 32a, 30b, 32b) on the other.

## Patentansprüche

1. Vorrichtung (10) zur Aufhängung eines Triebwerks (14) an einem Mast (12) eines Luftfahrzeugs, umfassend zwei Einheiten (20,22), die laterale Kurbelteile bilden, sowie Verbindungsmittel, welche getrennt jede der laterale Kurbelteile bildenden Einheiten jeweils mit dem Mast (12) und dem Triebwerk (14) verbinden können, **dadurch gekennzeichnet, dass** jedes der Verbindungsmittel ein Gabelgelenk (34,36,30a, 32a,30b,32b), das jeweils am Mast (12) und am Triebwerk (14) befestigt ist und ein zentrales Element (34b) sowie zwei laterale Elemente (34a,34c) aufweist, sowie eine Achse (38), die ohne Spiel die laterale Kurbelteile bildenden Einheiten (20,22) und das zentrale Element (34b) des Gabelgelenks durchsetzt und mit Spiel die lateralen Elemente (34a,34c) des Gabelgelenks durchsetzt, umfaßt.

2. Aufhängungsvorrichtung nach Anspruch 1, wobei die Aufhängungsvorrichtung (10) außerdem eine ein Beschlagteil bildende Einheit (18) sowie Befestigungsmittel (26) umfaßt, durch die die ein Beschlagteil bildende Einheit (18) mit dem Mast (12) befestigt werden kann, und wobei die ein Beschlagteil bildende Einheit (18) mindestens zwei Beschlagteile (18a,18b) aufweist und jede ein laterales Kurbelteil bildende Einheit (20,22) zwei Kurbelteile (20a,20b,22a,22b) umfaßt, welche getrennt jeweils jedes der Beschlagteile (18a,18b) mit dem Triebwerk (14) verbinden können.

3. Aufhängungsvorrichtung nach Anspruch 2, wobei die Aufhängungsvorrichtung (10) außerdem eine ein Zwischenteil bildende Einheit (26) umfaßt, die zwischen die beiden Beschlagteile (18a,18b) und den Mast (12) eingefügt ist, wobei die ein Zwischenteil bildende Einheit (26) zwei Zwischenstücke (26a,26b) umfaßt, und die Befestigungsmittel erste Befestigungsmittel jedes Beschlagteils (18a,18b) an einem der Zwischenstücke (26a,26b) sowie zweite Befestigungsmittel jedes Zwischenstücks (26a,26b) am Mast (12) umfassen.

4. Aufhängungsvorrichtung nach einem der Ansprüche 2 oder 3, wobei die Verbindungsmittel zwischen jeder ein laterales Kurbelteil bildenden Einheit (20,22) und den Beschlagteilen (18a, 18b) zwei weibliche Gabelteile (30a,32,30b,32b) umfassen, die jeweils jedem der Beschlagteile zugeordnet sind und deren nebeneinanderliegende Flanken die zentrale Flanke bilden.

5. Aufhängungsvorrichtung nach einem der vorangehenden Ansprüche, wobei Kugelgelenke (21a,21b,35) zwischen die Achse (38) einerseits und die Kurbelteile (20a,20b;22a,22b) und die zentrale Flanke (34b) der weiblichen Gabelteile (34,36,30a,32a,30b,32b) andererseits eingefügt sind.
